# FASCICULE DE BREVET EUROPEEN

(11) **EP 1 307 125 B1**
(45) Date de publication et mention de la délivrance du brevet: **10.12.2003**
(21) Numéro de dépôt: 01955428.6
(22) Date de dépôt: 17.07.2001
(51) Int. Cl.: A47J 31/06

(54) **PORTE-FILTRE POUR MACHINE A CAFE DU TYPE "ESPRESSO"**
FILTERTRÄGER FÜR EINE KAFFEEMASCHINE VOM ESPRESSOTYP
FILTER-HOLDER FOR ESPRESSO COFFEE MACHINE

(30) Priorité: 26.07.2000 FR 0009816
(43) Date de publication de la demande: 07.05.2003
(73) Titulaire: SEB S.A., 69130 Ecully (FR)
(72) Inventeur: ROLLAND, Jacky, F-14230 Saint Martin de Fontenay (FR)
(74) Mandataire: Kiehl, Hubert
(86) Numéro de dépôt international: FR0102319
(87) Numéro de publication internationale: WO02007576

(56) Documents cités:
- FR-A- 2 766 346
- NL-A- 7 706 110

## Description

La présente invention se rapporte à un porte-filtre destiné à être monté sur une machine à café de type espresso. Ce type de porte-filtre comprend une coupelle cylindrique munie d'un manche, une chambre de filtration délimitée par la paroi latérale interne de la coupelle et un fond perforé équipé d'une grille, une cuvette de recueillement de l'infusion placée sous la grille du fond perforé et munie de moyens d'évacuation. La sortie de l'infusion s'effectue par au moins deux pipes de sortie situées sur la face inférieure du porte-filtre (voir FR-A-2 766 346).
L'invention se rapporte plus particulièrement à un porte-filtre permettant de préparer une ou deux tasses de café.

Traditionnellement on utilise un porte-filtre avec une sortie pour préparer une tasse de café, et si l'on veut préparer simultanément deux tasses on utilise un autre porte-filtre muni de deux sorties. Cela multiplie le nombre d'accessoires et nécessite les opérations suivantes : retirer le premier porte-filtre de la machine, le ranger, prendre un deuxième porte-filtre.
Une autre solution consiste à utiliser un seul porte-filtre muni de deux pipes de sortie. Pour préparer une seule tasse, l'utilisateur doit placer la tasse précisément sous les deux pipes de sortie pour recueillir les deux écoulements de café. L'inconvénient de cette solution réside dans le positionnement de la tasse. Si la tasse n'est pas parfaitement placée sous les pipes de sortie le café coule à côté ou sur le bord de la tasse. Pour préparer deux tasses, l'utilisateur place les tasses côte à côte sous le porte-filtre, chaque tasse étant sous une pipe de sortie. Mais dans ce cas la répartition du café dans les tasses n'est pas toujours identique.

L'invention a notamment pour but de réaliser un porte-filtre qui permet de préparer une ou deux tasses de café en éliminant les inconvénients décrits ci-dessus.

Selon l'invention le porte-filtre comprend une auge de distribution de l'infusion placée sous la cuvette de recueillement et comprenant des moyens de canalisation de l'écoulement de l'infusion vers les pipes de sortie du porte-filtre, et un organe de sélection adapté à engendrer un déplacement de rotation relatif entre la cuvette et l'auge entre deux positions :
- une position deux tasses permettant de sélectionner les moyens de canalisation qui dirigent l'écoulement de l'infusion vers toutes les pipes de sortie ;
- une position une tasse permettant de sélectionner les moyens de canalisation qui dirigent l'écoulement vers une seule pipe de sortie.

Grâce à l'invention on obtient un porte-filtre unique qui permet aisément d'obtenir un ou plusieurs écoulements d'infusion pour préparer une ou plusieurs tasses. De plus ce résultat est obtenu sans l'emploi de robinet ou de clapet étanche qui nécessite des usinages de précision et augmentent les coûts de fabrication.

Selon une autre caractéristique importante de l'invention, le porte-filtre comprend un dispositif d'ajustement en hauteur du fond perforé actionné par l'organe de sélection. Ledit dispositif d'ajustement en hauteur comprend entre la partie inférieure de la coupelle et le fond perforé un empilage d'une couronne et d'une contre-couronne coaxiales munies sur leur faces en vis-à-vis d'une succession alternée de rampes et de plages étagées de telle manière que la rotation de l'organe de sélection entraîne un mouvement de rotation relatif entre les couronnes pour faire varier la hauteur du fond perforé dans la coupelle entre deux positions :
- une position deux tasses pour laquelle le fond perforé occupe une position basse ;
- une position une tasse pour laquelle le fond perforé occupe une position haute.

En position haute le fond perforé définit un volume réduit pour la chambre de filtration. Ce volume réduit peut recevoir, soit une dose de mouture correspondant à la préparation d'une tasse, soit une cartouche de mouture compactée de type Illy (marque déposée).

Tandis que, la position basse du fond perforé définit un volume de filtration plus important qui peut recevoir une quantité de mouture correspondant à la préparation d'au moins deux tasses.

Ainsi, l'organe de sélection du porte-filtre permet d'obtenir simultanément, soit un seul écoulement et un volume de filtration réduit, soit deux écoulements et un volume de filtration plus important.

D'autres caractéristiques et avantages de l'invention ressortiront de la description qui va suivre, donnée à titre d'exemple non limitatif, en référence aux dessins annexés dans lesquels:
- La figure 1 est une vue en coupe d'un premier mode de réalisation d'un porte-filtre selon l'invention, où le porte-filtre est en position deux tasses.
- La figure 2 est une vue agrandie selon la coupe A-A de la figure 1.
- La figure 3 est une vue analogue à celle de la figure 2, où le porte-filtre est en position une tasse.
- La figure 4 est une vue en perspective d'une auge de distribution selon le premier mode de réalisation à une échelle agrandie.
- La figure 5 est une vue en coupe d'un deuxième mode de réalisation d'un porte-filtre selon l'invention, où le porte-filtre est en position une tasse.
- La figure 6 est une vue selon la coupe A-A de la figure 5.
- La figure 7 est une vue analogue à celle de la figure 6, où le porte-filtre est en position deux tasses.

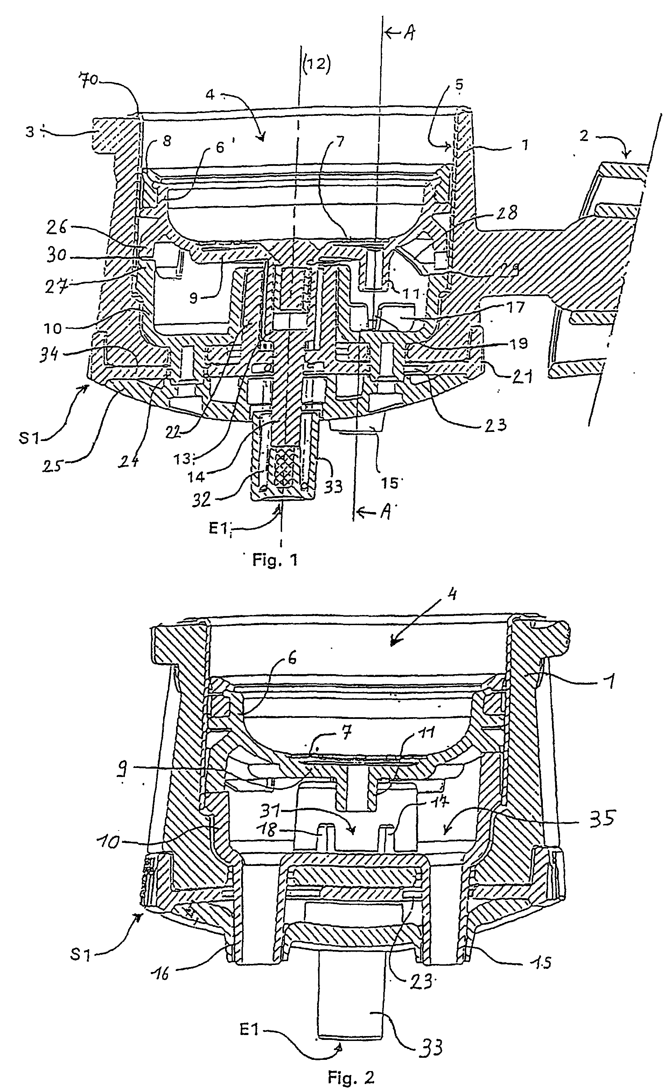

Les figures 1 à 4 représentent un porte-filtre suivant un premier monde de réalisation.
Ce porte-filtre comprend une coupelle cylindrique (1) munie d'un manche (2). Le débouché de la coupelle est destiné à être fixée sur la tête d'une machine à café de type "espresso" non représentée. Cette fixation est réalisée par une liaison baionnette dont on peut voir un élément (3) sur la figure 1. C'est par ce débouché qu'arrive l'eau chaude sous pression de la machine à café.
Le porte-filtre comprend une chambre de filtration (4). destinée à recevoir la mouture. Cette chambre de filtration est délimitée par la paroi latérale interne (5) de la coupelle, et un fond perforé (6) équipé d'une grille (7) destinée à retenir la mouture. La paroi latérale de la coupelle peut être munie d'une chemise (70) . Le fond perforé (6) est mobile en translation et en rotation par rapport à la coupelle (1) selon un axe dit vertical (12). L'étanchéité entre le fond perforé (6) et la chemise (70) est assurée par un joint annulaire (8).
Une cuvette (9) est placée sous la grille (7) du fond perforé (6) pour recueillir l'infusion et comporte un tube (11) servant de moyen d'évacuation de l'infusion. Dans ce mode de réalisation préféré le fond perforé (6) et la cuvette (9) ne forment qu'une seule pièce pour obtenir une réalisation peu coûteuse. Le tube (11), sensiblement vertical, est placé de manière excentrée par rapport à l'axe de rotation (12) et de préférence sur la périphérie du fond de la cuvette (9). Le fond de la cuvette (9) est prolongé selon son axe de rotation (12) par un carré d'entraînement (13) et un arbre (14).
La partie inférieure du porte-filtre comporte au moins deux pipes de sortie (15,16) de l'infusion sous lesquelles l'utilisateur place une ou plusieurs tasses.

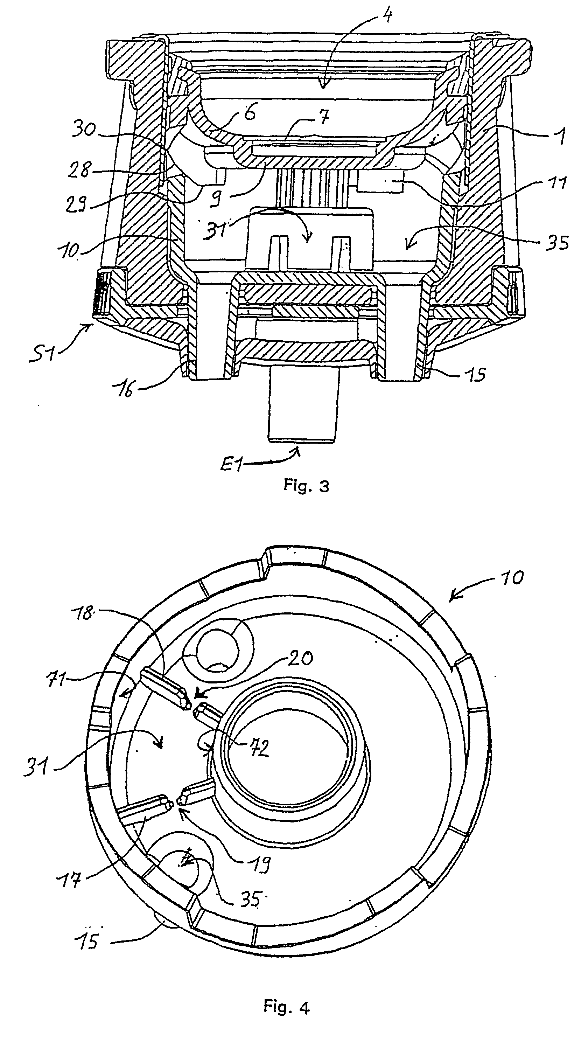

Selon l'invention, une auge (10) de distribution de l'infusion est placée sous la cuvette (9). La forme annulaire avec une section verticale en U de l'auge (10) laisse passer l'arbre (14) et le carré d'entraînement (13) de la cuvette (9). Cette auge est fixe par rapport à la coupelle (1) du porte-filtre. Le fond de l'auge de distribution (10) est relié aux pipes de sortie (15,16) comme le montre les figures 2 et 3.

L'auge de distribution (10) comprend des moyens de canalisation de l'écoulement vers une ou toutes les pipes de sortie (15,16). Ces moyens de canalisation de l'écoulement comprennent deux zones (31,35).

Une première zone (31), située entre les deux pipes de sortie (15,16), est délimitée par un cloisonnement présentant des passages (19,20) qui débouchent à proximité des pipes de sortie (15,16). Comme le montre la figure 4, ledit cloisonnement est délimité par deux nervures radiales (17, 18) et les parois intérieures (71,72) de la section en U de L'auge (10). Les passages (19,20) peuvent être calibrés pour mieux répartir l'écoulement de l'infusion vers les pipes de sortie. De même, la canalisation de l'écoulement depuis les passages (19,20) vers les pipes de sortie (15,16) peut être amélioré en réalisant une dépression autour de l'orifice de chaque pipe de sortie (15,16). Cette dépression peut être réalisée par une partie tronconique formant un entonnoir entre le fond de l'auge (10) et la pipe de sortie. La première zone (31) ainsi définie permet de diriger l'écoulement vers toutes les pipes de sortie.

Une deuxième zone (35) est définie par l'orifice d'entrée d'une pipe de sortie (15) et permet de diriger l'écoulement uniquement vers cette pipe de sortie (15). Cette zone (35) peut être étendue autour de la pipe de sortie (15) par une dépression telle que celle décrite ci-dessus.

Un organe de sélection (S1) permet d'engendrer un déplacement de rotation relatif entre la cuvette de recueillement (9) et l'auge de distribution (10) entre deux positions :
- une première position appelée deux tasses, pour préparer deux tasses mais qui permet plus généralement de préparer un nombre de tasses égal au nombre de pipes de sortie du porte-filtre ;
- une deuxième position appelée une tasse, pour préparer une seule tasse d'infusion.

Pour engendrer le mouvement de rotation relatif, l'organe de sélection (S1) comprend un disque (34) muni d'une bague périphérique de manipulation (21) et d'un emmanchement carré (22) central qui entraîne la cuvette (9) en rotation par l'intermédiaire de son carré d'entraînement (13), l'auge. de distribution (10) étant f ixe par rapport à la coupelle (1). Le disque de sélection (34) comporte des ouvertures en arc de cercle (23,24) pour laisser passer les pipes de sorties (15,16) et des vis de fixation du capot inférieur (25) .

En position deux tasses, représentée à la figure 2, les moyens d'évacuation de la cuvette (9), c'est à dire le tube (11), sont situés au-dessus des moyens de canalisation de l'auge, définis par la première zone (31), qui dirigent l'écoulement vers toutes les pipes de sortie (15,16). L'eau chaude fournie par la machine traverse la chambre de filtration (4) pour former une infusion. Cette infusion est recueillie par la cuvette (9) et s'écoule par gravité, par le tube (11), dans la première zone (31) de l'auge (10). Les deux passages calibrés (19,20) séparent l'infusion en deux écoulements et canalisent ces écoulements vers les orifices des deux pipes de sortie (15,16). On obtient ainsi deux écoulements à la sortie du porte-filtre sous lesquels on peut placer deux tasses.

En position une tasse, représentée à la figure 3, le tube (11) d'évacuation de la cuvette (9) est situé au-dessus des moyens de canalisation, définis par la deuxième zone (35), qui dirigent l'écoulement uniquement vers la pipe de sortie (15). L'infusion recueillie par la cuvette (9) s'écoule alors quasiment directement du tube (11) vers la pipe de sortie (15). On obtient ainsi un écoulement par une seule des pipes de sortie du porte-filtre sous laquelle on peut facilement placer une tasse.

Dans un mode de réalisation préféré, l'ouverture en arc de cercle (23) est définie de tel manière que ses extrémités viennent en butée avec les pipes de sortie (15,16) pour les deux positions extrêmes du disque (34) de l'organe de sélection. L'utilisateur effectue une rotation d'environ 45° de la bague de sélection (21) pour passer d'une position à l'autre.

Selon une autre caractéristique importante de l'invention, le porte-filtre comporte un dispositif pour faire varier la hauteur du fond perforé (6) dans la coupelle (1). Ce dispositif comporte entre la partie inférieure de la coupelle (1) et le fond perforé (6) un empilage d'une couronne (26) et d'une contre-couronne (27) coaxiales munies sur leur face en vis-à-vis d'une succession alternée de rampes (28) et de plages étagées (29,30) de telle manière que la rotation de l'organe de sélection (S1), précédemment décrit, entraîne un mouvement de rotation relatif entre les couronnes (26,27) pour faire varier la hauteur du fond perforé (6) dans la coupelle (1). Un tel dispositif est décrit plus en détails dans la demande FR9600883 de la demanderesse. La couronne (26) est maintenue en contact avec la contre-couronne (27) par l'intermédiaire d'un moyen de rappel élastique (32) placé entre le disque de sélection (34) et un bouton (33) solidaire de l'arbre (14) de la cuvette. Le moyen de rappel élastique (32) peut être constitué d'un ressort de compression. Dans le mode de réalisation décrit, la couronne (26) fait partie de la face inférieure du fond perforé (6) et la contre-couronne (27) fait partie de la face supérieure de l'auge de distribution (10). Ceci permet de limiter le nombre de pièces nécessaires à la réalisation du porte-filtre.
La rotation de la bague (21) de l'organe sélection (S1) de la position deux tasses à la position une tasse entraîne le passage du fond perforé (6) d'une position basse (figures 1 et 2) à une position haute (figure 3).

On obtient ainsi un porte-filtre unique qui permet, par une action simple sur l'organe de sélection (S1), de passer alternativement d'une configuration avec deux sorties de l'infusion et un volume de filtration important à une configuration avec une seule sortie de l'infusion et un volume de filtration réduit. Ce volume de filtration réduit peut recevoir une quantité de mouture correspondant à la préparation d'une tasse, ou une cartouche de mouture compactée de type Illy (marque déposée).

Selon une autre caractéristique avantageuse de l'invention, le porte-filtre comprend un organe d'éjection (E1) actionné par une pression sur le bouton (33). Cette pression à pour effet de comprimer le moyen de rappel élastique (32) et de remonter le fond perforé (6) par l'intermédiaire de l'arbre (14). On obtient ainsi un dispositif pour faciliter l'éjection de la mouture après infusion.

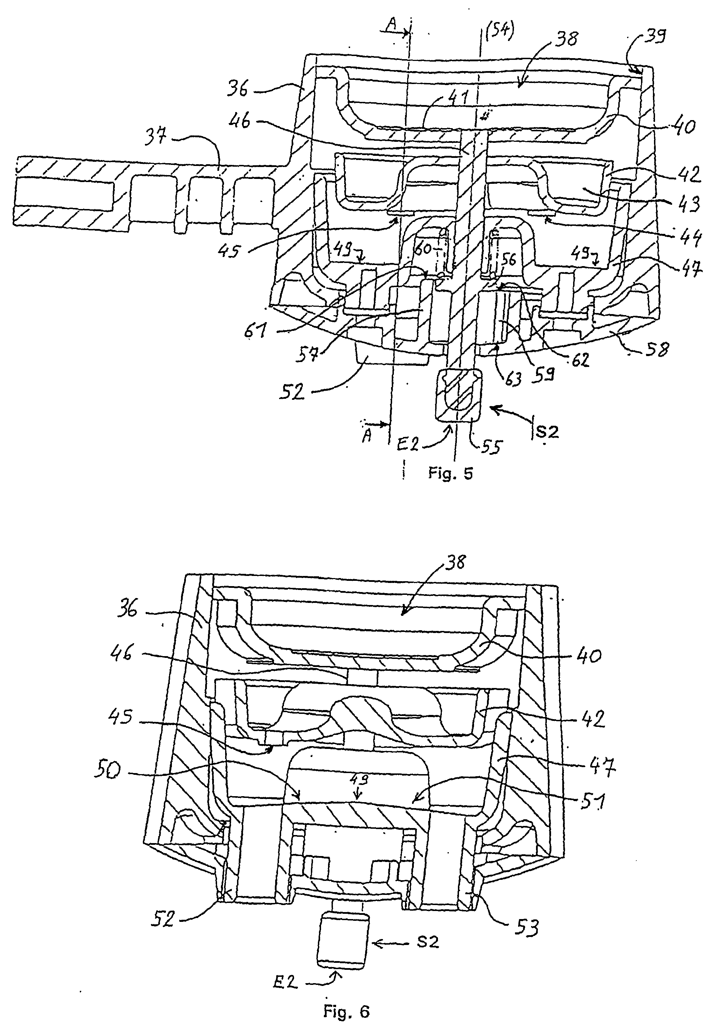

Un deuxième mode de réalisation d'un porte-filtre selon l'invention est représenté aux figures 5, 6 et 7.
Le porte-filtre comprend une coupelle cylindrique (36) à axe dit vertical (54) munie d'un manche (37), une chambre de filtration (38) délimitée par les parois latérales intérieures (39) de la coupelle (36) et par un fond perforé (40) équipé d'une grille (41).
Une cuvette (42) est placée sous la grille (41) du fond perforé (40) pour recueillir l'infusion. La cuvette a la forme d'un disque pourvu d'une gorge périphérique (43) à section verticale en U pourvue de deux orifices (44,45). Ces orifices constituent les moyens d'évacuation de l'infusion et sont placés de part et d'autre d'une diagonale de la cuvette..La cuvette (42) est mobile en rotation par rapport à la coupelle (36) et est fixé sur un arbre (46) . Pour obtenir un fond perforé (40) mobile en hauteur, celui-ci peut être fixé sur l'arbre (46). Dans ce cas, l'arbre (46) est mobile en rotation et en translation par rapport à la coupelle (36) selon l'axe vertical (54).
La partie inférieure du porte-filtre est munie d'au moins deux pipes de sortie de l'infusion (52,53) passant à travers un capot (58) fixé à la coupelle (36) par des vis non représentées.

Selon l'invention, une auge de distribution (47), placée sous la cuvette (42), est formée d'un anneau à section verticale en U permettant le passage de l'arbre (46). Cette auge est fixe par rapport à la coupelle (36).

Les moyens de canalisation de l'écoulement au fond de l'auge (47) comprennent deux plans inclinés (50,51) reliés par une arrête sommitale (49) selon un diamètre de l'auge. Sur la figure 5 cette arrête sommitale (49) est dans le plan de la vue en coupe. Comme le montre la figure 6 les plans inclinés (50,51) sont pourvus dans leur partie inférieure d'orifices qui communiquent avec les pipes de sorties (52,53). On obtient ainsi deux moyens de canalisation (50,51) dirigeant chacun l'écoulement vers une pipe de sortie.

Un organe de sélection (S2) permet d'engendrer un déplacement de rotation relatif entre la cuvette de recueillement (42) et l'auge de distribution (47).
Pour engendrer le mouvement de rotation relatif, l'organe de sélection (S2) comprend, outre l'axe (46), un bouton de manipulation (55), et une came quart de tour (56) adaptée à prendre appui sur le bord supérieur d'un élément tubulaire (57) formé sur la face interne du capot (58). Un moyen élastique (60), tel qu'un ressort, placé entre la face inférieure de l'auge de distribution (47) et la face supérieure de la came (56), maintient celle-ci en contact avec l'élément tubulaire (57) en deux positions angulaires différentes. Selon une caractéristique avantageuse l'élément tubulaire peut comporter un bossage (61) en arc de cercle où la came (56) ne peut pas prendre appui. Ce bossage (61) définit ainsi deux butées pour les deux positions angulaires de la came (56) .
Selon une autre caractéristique importante de l'invention l'organe de sélection (S2) permet de faire varier la hauteur du fond perforé (40) dans la coupelle (36). Pour cela l'élément tubulaire (57) comprend une zone haute (62) et une basse (63) située au fond d'une gorge (59) où la came (56) peut prendre appui. Ainsi l'organe de sélection (S2) permet de placer le fond perforé (40) en deux positions de hauteurs différentes.

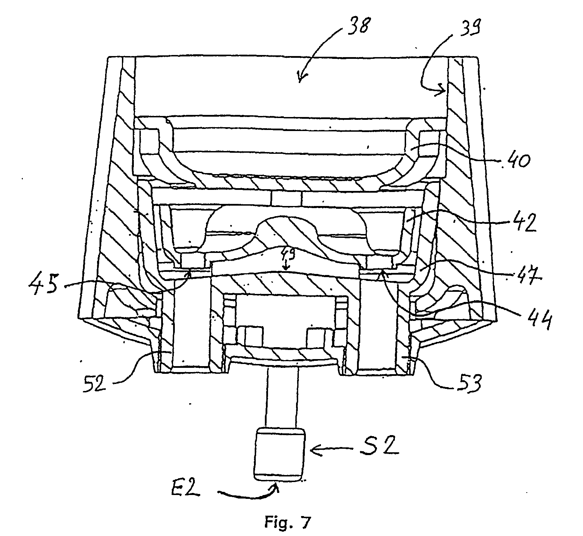

En position deux tasses, représentée à la figure 7, la came (56) est en appui sur la zone basse (63) de l'élément tubulaire (57) et occupe une position angulaire pour laquelle chaque orifice (44,45) de la cuvette (42) est placé au-dessus d'un plan incliné (50,51) de l'auge (47). Cette position angulaire permet de sélectionner les deux moyens de canalisation (50,51) qui dirigent l'écoulement vers les deux pipes de sorties. On obtient ainsi simultanément :
- deux écoulements de l'infusion depuis les deux orifices (44,45) de la cuvette qui sont canalisés par les deux plans inclinés (50,51) vers les deux pipes de sortie (52,53) du porte-filtre ;
- une position basse du fond perforé (40) qui permet d'obtenir un volume de filtration important.

En position une tasse, représentée aux figures 5 et 6, la came (56) est en appui sur la zone haute (62) de l'élément tubulaire (57) et occupe une position angulaire pour laquelle les deux orifices (44,45) de la cuvette (42) sont placés au-dessus d'un même plan incliné (50) de l'auge (47). Cette position angulaire permet de sélectionner le moyen de canalisation (50) qui dirige l'écoulement vers une seule pipe de sortie (52). On obtient ainsi simultanément :
- un écoulement de l'infusion depuis les deux orifices (44,45) de la cuvette qui est canalisé par un plan incliné (50,51) vers une seule pipe de sortie (52) du porte-filtre ;
- une position haute du fond perforé (40) qui permet d'obtenir un volume de filtration réduit.

Le porte-filtre permet ainsi, par une action simple sur l'organe de sélection (S2), de passer alternativement d'une configuration avec deux sorties de l'infusion et un volume de filtration important à une configuration avec une seule sortie de l'infusion et un volume de filtration réduit.

De manière avantageuse, le porte-filtre comprend un organe d'éjection (E2) actionné par une pression verticale sur le bouton (55). L'espace entre la face supérieure de la came (56) et le fond de l'auge (47) est suffisant pour permettre une montée de l'organe d' éjection (E2) qui comprime le moyen de rappel élastique (60) et fait varier la hauteur du fond perforé (40) dans la coupelle (36). Cette montée du fond perforé permet de faciliter l'éjection de la mouture après l'opération d'infusion. Dans ce mode de réalisation l'organe d'éjection (E2) est confondu avec l'organe de sélection (S2).

## Revendications

1. Porte-filtre destiné à être monté sur une machine à café de type "espresso" comprenant une coupelle cylindrique (1;36) munie d'un manche (2;37), une chambre de filtration (4;38) délimitée par la paroi latérale interne (5;39) de la coupelle et un fond perforé (6;40) équipé d'une grille (7;41), une cuvette (9;42) de recueillement de l'infusion placée sous la grille (7;41) du fond perforé (6;40) et munie de moyens d'évacuation de l'infusion (11;44,45), ainsi qu'au moins deux pipes de sortie de l'infusion (15,16;52,53),
**caractérisé en ce que** le porte-filtre comprend, de plus, une auge (10;47) de distribution de l'infusion placée sous la cuvette de recueillement et comprenant des moyens de canalisation (31,35;50,51) de l'écoulement de l'infusion vers les pipes de sortie du porte-filtre, et un organe de sélection (S1,S2) adapté à engendrer un déplacement de rotation relatif entre la cuvette (9;42) et l'auge (10;47) entre deux positions :
- une position deux tasses permettant de sélectionner les moyens de canalisation qui dirigent l'écoulement de l'infusion vers toutes les pipes de sorties (15,16;52,53) ;
- une position une tasse permettant de sélectionner les moyens de canalisation qui dirigent l'écoulement vers une seule pipe de sortie (15;52).

2. Porte-filtre selon la revendication 1,
**caractérisé en ce que** les moyens d'évacuation de l'infusion de la cuvette (9) comprennent un tube (11) situé sur le fond de la cuvette de manière excentrée, et les moyens de canalisation de l'écoulement dans l'auge (10) de distribution comprenant une première zone (31) située entre les pipes de sortie (15,16) et délimitée par un cloisonnement présentant deux passages calibrés (19,20) vers les pipes de sortie, une deuxième zone (35) définie par l'orifice d'entrée d'une pipe de sortie (15), et **en ce que** l'organe de sélection (S1) comprenant une bague périphérique (21) entraîne en rotation la cuvette de recueillement (9) par l'intermédiaire d'un disque (34) entre deux positions :
- une position deux tasses, pour laquelle le tube (11) de la cuvette est situé au-dessus de la première zone (31) de l'auge de distribution ;
- une position une tasse, pour laquelle le tube (11) de la cuvette est placé au-dessus de la deuxième zone (35) de l'auge de distribution.

3. Porte-filtre selon la revendication 1,
**caractérisé en ce que** les moyens d'évacuation de la cuvette (42) comprennent deux orifices (44,45) situés de part et d'autre d'une diagonale de la cuvette, et les moyens de canalisation de l'écoulement dans l'auge (47) de distribution comprennent deux plans inclinés (50,51) dont l'intersection forme une arrête sommitale (49) selon une diagonale de l'auge de distribution (47) , chaque plan incliné (50,51) étant pourvu dans sa partie inférieure d'un orifice qui communique avec une pipe de sortie (52,53), et **en ce que** l'organe de sélection (S2) entraîne en rotation la cuvette de recueillement (42) par l'intermédiaire d'un arbre (46) entre deux positions :
- une position deux tasses, pour laquelle chaque orifice (44,45) de la cuvette est placé au-dessus d'un plan incliné (50,51) ;
- une position une tasse, pour laquelle les deux orifices (44,45) de la cuvette sont situés au-dessus d'un seul des plans inclinés (50).

4. Porte-filtre selon l'une quelconque des revendications précédentes, et comprenant un fond perforé mobile (6) en hauteur,
**caractérisé en ce que** la coupelle (1) comporte entre sa partie inférieure et le fond perforé (6) un empilage d'une couronne (26) et d'une contre-couronne (27) coaxiales munies sur leur faces en vis-à-vis d'une succession alternée de rampes (28) et de plages étagées (29,30) de telle manière que la rotation de l'organe de sélection (S1) entraîne un mouvement de rotation relatif entre les couronnes (26,27) pour faire varier la hauteur du fond perforé dans la coupelle.

5. Porte-filtre selon la revendication 4,
**caractérisé en ce que** la couronne (26) fait partie de la face inférieure du fond perforé (6) et que la contre-couronne (27) fait partie de la face supérieure de l'auge de distribution (10).

6. Porte-filtre selon la revendication 1 ou 3, et comportant un fond perforé (40) mobile en hauteur
**caractérisé en ce que** le fond de la coupelle (36) comprend un élément tubulaire (57) muni d'une zone haute (62) et une zone basse (63), l'organe de sélection (S2) fixé au fond perforé (40) comprend une came (56) adaptée à être maintenue en appui sur le dit élément tubulaire (57) par l'intermédiaire d'un moyen élastique (60) en deux positions :
- une première position pour laquelle la came (56) est en appui sur la zone basse (63) de l'élément tubulaire (57) ;
- une deuxième position pour laquelle la came (56) est en appui sur la zone haute (62) de l'élément tubulaire (57).

7. Porte-filtre selon l'une quelconque des revendications 4 à 6,
**caractérisé en ce que** l'organe de sélection (S1 ;S2) place le fond perforé en deux positions :
- une position deux tasses, pour laquelle le fond perforé (6 ;40) occupe une position base ;
- une position une tasse, pour laquelle le fond perforé (6 ;40) occupe une position haute.

8. Porte-filtre selon l'une quelconque des revendications précédentes, et comprenant un fond perforé mobile en hauteur,
**caractérisé en ce que** le porte-filtre comprend un organe d'éjection (E1;E2) relié au fond perforé (6;40) par l'intermédiaire d'un arbre (14;46) et maintenu en position de repos par un moyen de rappel élastique (32;60), ledit organe d'éjection (E1;E2) étant mobile selon l'axe vertical (12;54) de la coupelle de manière à ce qu'une pression sur celui-ci remonte le fond perforé (6;40) pour faciliter l'éjection de la mouture.

## Claims

1. Filter holder intended to be mounted on a coffee machine of the "espresso" type comprising a cylindrical cup (1; 36) provided with a handle (2; 37), a filtration chamber (4; 38) delimited by the internal side wall (5; 39) of the cup and a perforated bottom (6; 40) equipped with a grille (7; 41), a bowl (9; 42) for collecting the infusion placed under the grille (7; 41) of the perforated bottom (6; 40) and provided with means of discharging the infusion (11; 44, 45), as well as two infusion outlet pipes (15, 16; 52, 53),
**characterised in that** the.filter holder also comprises an infusion dispensing trough (10; 47) placed under the collection bowl and comprising means (31, 35; 50, 51) for channelling the flow of infusion to the filter holder outlet pipes, and a selection device (S1, S2) adapted to cause a relative rotation movement between the bowl (9; 42) and the trough (10; 47) between two positions:
- a two-cup position for selecting the channelling means which direct the flow of infusion to all the outlet pipes (15, 16; 52, 53);
- a one-cup position for selecting the channelling means which direct the flow to a single outlet pipe (15; 52).

2. Filter holder according to Claim 1, **characterised in that** the means of discharging the infusion from the bowl (9) comprise a tube (11) situated off-centre on the bottom of the bowl, and the means of channelling the flow in the dispensing trough (10) comprise a first zone (31) situated between the outlet pipes (15, 16) and delimited by a partitioning having two calibrated passages (19, 20) to the outlet pipes, a second zone (35) defined by the inlet orifice of an outlet pipe (15), and **in that** the selection member (S1) comprising a peripheral ring (21) drives the collection bowl (9) in rotation by means of a disc (34) between two positions:
- a two-cup position, in which the tube (11) of the bowl is situated above the first zone (31) of the dispensing trough;
- a one-cup position, in which the tube (11) of the bowl is placed above the second zone (35) of the dispensing trough.

3. Filter holder according to Claim 1, **characterised in that** the means of discharging the bowl (42) comprise two orifices (44, 45) situated on each side of a diagonal of the bowl, and the means of channelling the flow in the dispensing trough (47) comprise two inclined planes (50, 51) whose intersection forms a top ridge (49) along a diagonal of the dispensing trough (47), each inclined plane (50, 51) being provided in its bottom part with an orifice which communicates with an outlet pipe (52, 53), and **in that** the selection member (S2) drives the collection bowl (42) in rotation by means of a shaft (46) between two positions:
- a two-cup position, in which each orifice (44, 45) of the bowl is placed above an inclined plane (50, 51);
- a one-cup position, in which the two orifices (44, 45) of the bowl are situated above only one of the inclined planes (50).

4. Filter holder according to any one of the preceding claims, and comprising a perforated bottom (6) movable for height,
**characterised in that** the cup (1) comprises, between its bottom part and the perforated bottom (6), a stack consisting of a ring (26) and a counter-ring (27), coaxial, provided on their facing faces with an alternating succession of ramps (28) and stepped areas (29, 30) so that the rotation of the selection member (S1) causes a relative rotation movement between the rings (26, 27) in order to vary the height of the perforated bottom in the cup.

5. Filter holder according to Claim 4, **characterised in that** the ring (26) forms part of the bottom face of the perforated bottom (6) and **in that** the counter-ring (27) forms part of the top face of the dispensing trough (10).

6. Filter holder according to Claim 1 or 3, and comprising a perforated bottom (40) movable for height
**characterised in that** the bottom of the cup (36) comprises a tubular element (57) provided with a high zone (52) and a low zone (63), the selection member (S2) fixed to the perforated bottom (40) comprises a cam (56) adapted to be maintained in abutment on the said tubular element (57) by means of an elastic means (60) in two positions:
- a first position in which the cam (56) is in abutment on the low zone (63) of the tubular element (57);
- a second position in which the cam (56) is in abutment on the high zone (62) of the tubular element (57).

7. Filter holder according to any one of Claims 4 to 6,
**characterised in that** the selection member (S1; S2) places the perforated bottom in two positions:
- a two-cup position, in which the perforated bottom (6; 40) occupies a low position;
- a one-cup position, in which the perforated bottom (6; 40) occupies a high position.

8. Filter holder according to any one of the preceding claims, and comprising a perforated bottom movable for height, **characterised in that** the filter holder comprises an ejection member (E1; E2) connected to the perforated bottom (6; 40) by means of a shaft (14; 46) and maintained in the idle position by an elastic return means (32; 60), the said ejection member (E1; E2) being movable along the vertical axis (12; 54) of the cup so that pressure on the latter raises the perforated bottom (6; 40) in order to facilitate the ejection of the grounds.

## Patentansprüche

1. Filterträger zum Anbringen an einer Kaffeemaschine vom Typ "Espresso" mit einer zylindrischen Wanne (1; 36), die mit einem Handgriff (2; 37) versehen ist, einer Filterkammer (4; 38), die durch die innere Seitenwand (5; 39) der Wanne und einen gelochten Boden (6; 40), der mit einem Sieb (7; 41) ausgerüstet ist, begrenzt ist, einer unter dem Sieb (7; 41) des gelochten Bodens (6; 40) angeordneten Schale (9; 42) zum Auffangen des Kaffeegetränks, die mit einer Ableitungsvorrichtung (11; 44, 45) für das Kaffeegetränk versehen ist, sowie mit mindestens zwei Kaffeeauslaßrohren (15, 16; 52, 53), **dadurch gekennzeichnet, daß** der Filterträger außerdem einen Trog (10; 47) zur Verteilung des Kaffeegetränks aufweist, der unter der Auffangschale angeordnet ist und eine Vorrichtung zur Kanalisierung (31, 35; 50, 51) des Ablaufs des Kaffees zu den Auslaufrohren des Filterträgers aufweist, und ein Wahlelement (S1, S2) aufweist, das zur Erzeugung einer relativen Drehverschiebung zwischen der Schale (9; 42) und dem Trog (10; 47) zwischen zwei Stellungen eingerichtet ist:
- einer Zwei-Tassen-Stellung, welche die Auswahl der Kanalisierungsvorrichtung ermöglicht, welche den Ablauf des Kaffees allen Auslaßrohren (15, 16; 52, 53) zuleitet;
- einer Eine-Tasse-Stellung, welche die Auswahl der Kanalisierungsvorrichtung ermöglicht, welche den Ablauf zu nur einem Auslaßrohr (15; 52) lenkt.

2. Filterträger nach Anspruch 1, **dadurch gekennzeichnet, daß** die Vorrichtung zur Ableitung des Kaffees aus der Schale (9) ein am Boden der Schale exzentrisch angeordnetes Rohr (11) aufweist und die Vorrichtung zur Kanalisierung des Ablaufs im Verteilungstrog (10) eine erste Zone (31) aufweist, die zwischen den Auslaßrohren (15, 16) angeordnet und durch eine Trennwand begrenzt ist, die zwei kalibrierte Durchlässe (19, 20) zu den Auslaßrohren aufweist, und eine zweite Zone (35), welche durch die Einlaßöffnung eines Auslaßrohrs (15) definiert ist, und daß das Wahlelement (S1) einen Umfangsring (21) aufweist, der die Auffangschale (9) mittels einer Scheibe (34) drehend zwischen zwei Stellungen antreibt:
- einer Zwei-Tassen-Stellung, in welcher das Rohr (11) der Schale oberhalb der ersten Zone (31) des Verteilungstroges angeordnet ist;
- einer Eine-Tasse-Stellung, in welcher das Rohr (11) der Schale oberhalb der zweiten Zone (35) des Verteilungstroges angeordnet ist.

3. Filterträger nach Anspruch 1, **dadurch gekennzeichnet, daß** die Ablaufvorrichtung der Schale (42) zwei beiderseits einer Diagonale der Schale liegende Öffnungen (44, 45) aufweist und die Vorrichtung zur Kanalisierung des Ablaufs in dem Verteilungstrog (47) zwei schräge Flächen (50, 51) aufweist, deren Schnitt eine Kopfkante (49) gemäß einer Diagonalen des Verteilungstroges (47) bildet, wobei jede schräge Fläche (50, 51) in ihrem unteren Teil mit einer Öffnung versehen ist, die mit einem Auslaßrohr (52, 53) in Verbindung ist, und daß das Wahlelement (S2) die Auffangschale (42) mittels einer Welle (46) drehend zwischen zwei Stellungen antreibt:
- einer Zwei-Tassen-Stellung, in welcher jede Öffnung (44, 45) der Schale oberhalb einer schrägen Fläche (50, 51) angeordnet ist;
- einer Eine-Tasse-Stellung, in welcher die zwei Öffnungen (44, 45) der Schale oberhalb einer einzigen (50) der schrägen Flächen angeordnet sind.

4. Filterträger nach einem der vorangehenden Ansprüche und mit einem der Höhe nach beweglichen durchbrochenen Boden (6), **dadurch gekennzeichnet, daß** die Wanne (1) zwischen ihrem unteren Teil und dem gelochten Boden (6) einen Stapel von einem Kranz (26) und einem dazu koaxialen Gegenkranz (27) aufweist, die an ihren einander gegenüberliegenden Flächen eine Folge von abwechselnd Rampen (28) und gestuften Bereichen (29, 30) aufweisen, so daß die Drehung des Wahlelements (S1) eine relative Drehbewegung zwischen den Kränzen (26, 27) zur Folge hat, um die Höhe des gelochten Bodens in der Wanne zu verändern.

5. Filterträger nach Anspruch 4, **dadurch gekennzeichnet, daß** der Kranz (26) einen Teil der Unterseite des gelochten Bodens (6) bildet und der Gegenkranz (27) einen Teil der oberen Seite des Verteilungstroges (10) bildet.

6. Filterträger nach Anspruch 1 oder 3 und mit einem der Höhe nach beweglichen gelochten Boden (4), **dadurch gekennzeichnet, daß** der Boden der Wanne (36) ein rohrförmiges Element (57) aufweist, das mit einer oberen Zone (62) und einer unteren Zone (63) versehen ist, wobei das Wahlelement (S2), das am gelochten Boden (40) befestigt ist, eine Nocke (56) aufweist, die mittels einer elastischen Vorrichtung (60) in zwei Stellungen gegen das rohrförmige Element (57) angedrückt gehalten ist:
- einer ersten Stellung, in welcher die Nocke (56) gegen die untere Zone (63) des rohrförmigen Elementes (57) drückt;
- einer zweiten Stellung, in welcher die Nocke (56) gegen die obere Zone (62) des rohrförmigen Elementes (57) drückt.

7. Filterträger nach einem der Ansprüche 4 bis 6, **dadurch gekennzeichnet, daß** das Wahlelement (S1; S2) den gelochten Boden in zwei Stellungen bringt:
- eine Zwei-Tassen-Stellung, in welcher der gelochte Boden (6; 40) eine untere Stellung einnimmt;
- eine Eine-Tasse-Stellung, in welcher der gelochte Boden (6; 40) eine obere Stellung einnimmt.

8. Filterträger nach einem der vorangehenden Ansprüche, **dadurch gekennzeichnet, daß** der Filterträger ein Auswurfelement (E1; E2) aufweist, das mit dem gelochten Boden (6; 40) mittels einer Welle (14;46) verbunden und mittels einer elastischen Rückstellvorrichtung (32; 60) in der Ruhestellung gehalten ist, wobei das Auswurfelement (E1; E2) gemäß der senkrechten Achse (12; 54) der Wanne beweglich ist, so daß ein Druck auf das Element den gelochten Boden (6; 40) nach oben schiebt, um den Auswurf des Kaffeesatzes zu erleichtern.
